(19) Europäisches Patentamt

European Patent Office

Office européen des brevets

(11) **EP 4 657 020 A1**

(12) **DEMANDE DE BREVET EUROPEEN**

(43) Date de publication:
**03.12.2025 Bulletin 2025/49**

(21) Numéro de dépôt: **25179509.2**

(22) Date de dépôt: **28.05.2025**

(51) Classification Internationale des Brevets (IPC):
**G01C 19/58** (2006.01)    **G01P 15/00** (2006.01)

(52) Classification Coopérative des Brevets (CPC):
**G01C 19/58; G01P 15/00**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **29.05.2024 FR 2405537**

(71) Demandeur: **THALES
92190 Meudon (FR)**

(72) Inventeurs:
• **WIRTSCHAFTER, Benjamin
91120 PALAISEAU (FR)**
• **DUPONT-NIVET, Matthieu
91120 PALAISEAU (FR)**
• **HELLO, Soizic
26027 VALENCE CEDEX (FR)**

(74) Mandataire: **Lavoix
2, place d'Estienne d'Orves
75441 Paris Cedex 09 (FR)**

(54) **SYSTÈME DE MESURE À ATOMES ULTRAFROIDS ET PROCÉDÉ ASSOCIÉ**

(57) La présente invention concerne un système de mesure (10) à atomes ultrafroids, le système de mesure (20) comprenant :

- un ensemble de capteurs (14) inertiels à atomes ultrafroids, chaque capteur (14) de l'ensemble étant un capteur interférométrique configuré pour mesurer une grandeur physique par mise en œuvre d'une séquence d'interférométrie,

- une unité de traitement (22) configurée pour appliquer, pour au moins un sous-ensemble de capteurs, une séquence d'interférométrie respective à chaque capteur (14) d'un sous-ensemble de capteurs, la mise en œuvre des séquences d'interférométrie respective par ledit au moins un sous-ensemble de capteurs (14) conduisant les capteurs (14) du sous-ensemble à mesurer la même grandeur physique avec une trajectoire suivie lors du déplacement variant d'un capteur (14) du sous-ensemble à un autre capteur (14) du sous-ensemble par au moins un paramètre relatif à la trajectoire.

FIG.1

EP 4 657 020 A1

**Description**

La présente invention concerne un système de mesure à atomes ultrafroids. La présente invention se rapporte également à un procédé de mesure associé.

L'invention se situe dans le domaine des capteurs inertiels à atomes froids sur puces.

Un capteur inertiel est un dispositif permettant de mesurer des paramètres physiques liés au mouvement comme des accélérations ou des vitesses angulaires.

Un capteur inertiel à atomes froids sur puce est un capteur interférométrique permettant d'obtenir la mesure d'un paramètre physique par utilisation d'une technique interférométrique.

Cela permet d'effectuer ce type de mesures inertielles avec une compacité et des performances suffisantes pour une exploitation dans des applications embarquées.

Le signal mesuré par interférométrie est la population de chacun des états atomiques. Cette mesure de population permet d'en déduire la phase obtenue après l'interférométrie qui elle-même dépend du paramètre à mesurer, que ce soit une accélération ou une vitesse angulaire.

Toutefois, le signal de population mesuré est un signal pseudopériodique en fonction de la fréquence d'interrogation, de sorte qu'à une valeur de population donnée correspondent différentes valeurs du paramètre à mesurer. Ce caractère pseudopériodique génère donc une indétermination.

Pour lever cette indétermination, il est connu d'hybrider le capteur inertiel à atomes froids avec un capteur inertiel classique.

Cela revient à hybrider un capteur à faible étendue de mesure (capteur à atomes froids) avec un capteur à large étendue de mesure (capteur classique). L'étendue de mesure est définie comme la différence entre la valeur maximale et la valeur minimale de la grandeur physique à mesurer (le mesurande), qu'il est possible de mesurer avec le capteur.

L'hybridation est, par exemple, réalisée par utilisation d'un vernier entre les deux capteurs.

Une autre technique est de réduire volontairement la sensibilité du capteur inertiel de manière à imposer une étendue de mesure correspondant à une plage relativement grande permettant de lever l'ambiguïté.

Aucune de ces techniques ne permet donc de bénéficier à la fois d'une grande sensibilité et d'une grande étendue de mesure.

Il existe donc un besoin pour un système de mesure à atomes froids présentant à la fois une grande sensibilité et une grande étendue de mesure.

A cet effet, il est décrit un système de mesure à atomes ultrafroids, le système de mesure comprenant :

- un ensemble de capteurs inertiels à atomes ultrafroids, chaque capteur de l'ensemble étant un capteur interférométrique configuré pour mesurer une grandeur physique par mise en œuvre d'une séquence d'interférométrie, la mise en œuvre de la séquence d'interférométrie conduisant le capteur à :

  - générer un potentiel initial de piégeage d'un nuage d'atomes ultrafroids,
  - séparer spatialement le nuage piégé dans le potentiel initial en un premier nuage d'atomes ultrafroids dans un premier état et un deuxième nuage d'atomes ultrafroids dans un deuxième état par formation respective d'un premier piège à atomes pour le premier nuage et d'un deuxième piège à atomes pour le deuxième nuage, et
  - déplacer les pièges formés suivant une trajectoire respective pour le premier nuage et le deuxième nuage,

- une unité de traitement configurée pour appliquer, pour au moins un sous-ensemble de capteurs, une séquence d'interférométrie respective à chaque capteur d'un sous-ensemble de capteurs, la mise en œuvre des séquences d'interférométrie respective par ledit au moins un sous-ensemble de capteurs conduisant les capteurs du sous-ensemble à mesurer la même grandeur physique avec une trajectoire suivie lors du déplacement des pièges variant d'un capteur du sous-ensemble à un autre capteur du sous-ensemble par au moins un paramètre relatif à la trajectoire.

Suivant d'autres aspects avantageux de l'invention, le système de mesure comprend une ou plusieurs des caractéristiques suivantes, prises isolément ou suivant toutes les combinaisons techniquement possibles :

- au moins un sous-ensemble de capteurs est propre à mesurer une accélération, au moins un paramètre relatif à la trajectoire étant une distance de séparation entre les deux pièges.
- au moins un sous-ensemble de capteurs est propre à mesurer une accélération, au moins un paramètre relatif à la trajectoire étant le temps de parcours de la trajectoire.
- au moins un sous-ensemble de capteurs est propre à mesurer une vitesse angulaire, au moins un paramètre relatif à la trajectoire étant la surface de l'aire délimitée par la trajectoire.
- au moins un sous-ensemble de capteurs est propre à mesurer une vitesse angulaire, au moins un paramètre relatif à la trajectoire étant le nombre de fois que la trajectoire est parcourue.
- l'ensemble de capteurs est réalisé sur une même puce atomique placée dans une enceinte à vide et comportant des guides d'ondes et des éléments conducteurs.
- le système de mesure comporte, en outre :

  - un dispositif de génération d'atomes configuré pour générer un nuage initial d'atomes ultrafroids,
  - un générateur de champ magnétique homogène,
  - un dispositif d'alimentation comprenant au moins un générateur micro-onde et au moins un générateur de courant continu, le dispositif d'alimentation étant configuré pour appliquer des signaux micro-ondes aux guides d'ondes et des courants continus aux éléments conducteurs,
    l'unité de traitement appliquant une séquence d'interférométrie respective à chaque capteur de l'au moins un sous-ensemble de capteurs en commandant le générateur de champ magnétique homogène et le dispositif d'alimentation.

- l'unité de traitement est propre à appliquer une séquence d'interférométrie respective à chaque capteur de plusieurs sous-ensemble de capteurs, la mise en œuvre des séquences d'interférométrie respective par chaque sous-ensemble de capteurs conduisant les capteurs dudit sous-ensemble à mesurer la même grandeur physique avec une trajectoire suivie lors du déplacement variant d'un capteur du sous-ensemble à un autre capteur du sous-ensemble par au moins un paramètre relatif à la trajectoire, la grandeur physique mesurée étant distincte d'un sous-ensemble à l'autre.
- le nombre de capteurs d'un sous-ensemble est compris entre 2 et 30.

La description décrit également un procédé de mesure d'une grandeur physique par un système de mesure à atomes ultrafroids, le système de mesure comprenant :

- un ensemble de capteurs inertiels à atomes ultrafroids, chaque capteur de l'ensemble étant un capteur interférométrique configuré pour mesurer une grandeur physique par mise en œuvre d'une séquence d'interférométrie,
- une unité de traitement,

le procédé de mesure comprenant :

  - une étape d'application par l'unité de traitement, pour au moins un sous-ensemble de capteurs, d'une séquence d'interférométrie respective à chaque capteur d'un sous-ensemble de capteurs,

la mise en œuvre de la séquence d'interférométrie respective par ledit au moins un sous-ensemble de capteurs conduisant les capteurs du sous-ensemble à :

  - générer un potentiel initial de piégeage d'un nuage d'atomes ultrafroids,
  - séparer spatialement le nuage piégé dans le potentiel initial en un premier nuage d'atomes ultrafroids dans un premier état et un deuxième nuage d'atomes ultrafroids dans un deuxième état par formation respective d'un premier piège à atomes pour le premier nuage et d'un deuxième piège à atomes pour le deuxième nuage,
  - déplacer les pièges formés suivant une trajectoire respective pour le premier nuage et le deuxième nuage, et
  - mesurer la même grandeur physique avec une trajectoire suivie lors du déplacement variant d'un capteur du sous-ensemble à un autre capteur du sous-ensemble par au moins un paramètre relatif à la trajectoire.

Dans la présente description, l'expression « propre à » signifie indifféremment « adapté pour », « adapté à » ou « configuré pour ».
Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un système de mesure à atomes froids comportant des capteurs inertiels réalisés sur une puce atomique matriciel,
- la figure 2 est une représentation schématique d'un exemple de puce atomique permettant de réaliser un accéléromètre à atomes ultrafroids en présence d'une séquence d'interférométrie adaptée,
- la figure 3 illustre la géométrie des guides et fils de la puce atomique de la figure 2,
- la figure 4 est une représentation schématique du trajet des nuages atomiques (partie a de la figure 4) à différents instants de la mise en œuvre d'une séquence d'interférométrie adaptée pour la puce de la figure 2 (chronogramme de la partie b de la figure 4),

- la figure 5 est une représentation schématique d'un exemple de puce atomique permettant de réaliser un gyromètre à atomes ultrafroids en présence d'une séquence d'interférométrie adaptée,
- la figure 6 illustre la géométrie des guides et fils de la puce atomique de la figure 5,
- la figure 7 est une représentation schématique du trajet des nuages atomiques (partie a de la figure 7) à différents instants de la mise en œuvre d'une séquence d'interférométrie adaptée pour la puce de la figure 5 (chronogramme de la partie b de la figure 7),
- la figure 8 est une représentation schématique d'un autre exemple de puce atomique permettant de réaliser un gyromètre à atomes ultrafroids en présence d'une séquence d'interférométrie adaptée,
- la figure 9 est une représentation schématique du trajet des nuages atomiques à différents instants de la mise en œuvre d'une séquence d'interférométrie adaptée pour la puce de la figure 8,
- la figure 10 est une représentation schématique de la puce atomique matriciel de la figure 1 permettant la réalisation des capteurs inertiels,
- la figure 11 est une représentation schématique d'un autre exemple de puce atomique matriciel permettant la réalisation des capteurs inertiels, et
- la figure 12 est une représentation schématique du système de mesure lors de son fonctionnement.

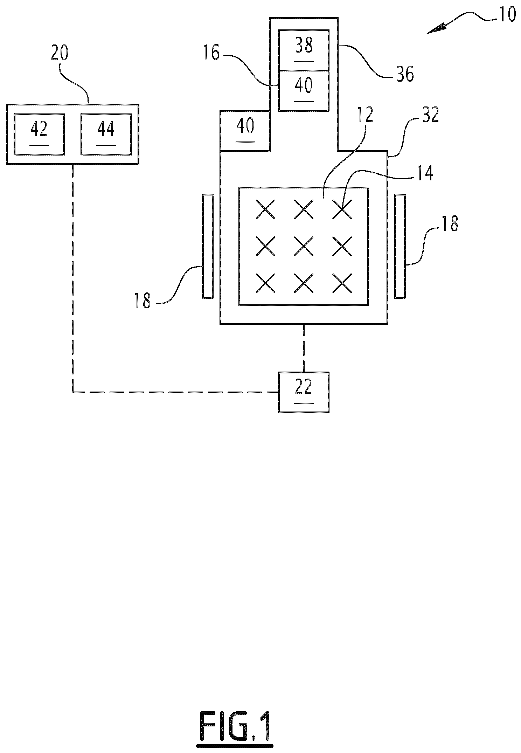

Un système de mesure 10 à atomes ultrafroids est illustré de manière schématique en référence sur la figure 1.

Le système de mesure 10 est propre à mesurer un ou plusieurs paramètres physiques liés au mouvement comme des accélérations ou des vitesses angulaires, qui joints à une horloge permet de se repérer dans l'espace.

Lorsque le système de mesure 10 est propre à mesurer accélération et vitesse angulaire, le système de mesure est une centrale inertielle.

Une centrale inertielle est parfois désignée par l'acronyme UMI qui renvoie à la dénomination correspondante de « unité de mesure inertielle ».

Il est considéré ici qu'un système de mesure 10 donnant accès à trois valeurs distinctes d'accélérations ou de vitesse angulaire selon trois axes distincts et non colinéaire est une centrale inertielle.

De préférence, le système de mesure 10 permet d'obtenir la mesure des valeurs de l'accélération selon deux axes distincts et les valeurs de vitesse angulaire selon trois axes distincts.

Le système de mesure est un système de mesure à atomes ultrafroids.

Des atomes sont considérés comme ultrafroids lorsque leur température est inférieure à 400 nanokelvins (nK), de préférence inférieure à 300 nK.

Les atomes utilisés sont, par exemple, des atomes alcalins.

Pour le cas particulier où les atomes sont du rubidium, notamment du rubidium 87, la température des atomes est comprise entre 50 nK et 400 nK, de préférence comprise entre 100 nK et 300 nK.

Le système de mesure 10 comporte une puce atomique 12 sur laquelle est réalisé un ensemble de capteurs inertiels 14.

Le système de mesure 10 comprend un dispositif de génération d'atomes 16, un générateur de champ magnétique homogène 18, un dispositif d'alimentation 20 et une unité de traitement 22.

Pour bien comprendre l'interaction entre ces différents éléments du système de mesure 10, il convient de d'abord décrire comment réaliser un capteur inertiel sur puce atomique.

Chaque capteur inertiel est un dispositif permettant de mesurer des paramètres physiques liés au mouvement comme des accélérations ou des vitesses angulaires.

Chaque capteur inertiel est un capteur interférométrique à atomes ultrafroids.

Chaque capteur de l'ensemble est ainsi configuré pour mesurer une grandeur physique par mise en œuvre d'une séquence d'interférométrie.

Selon la séquence d'interférométrie appliquée au capteur inertiel, le fonctionnement, c'est-à-dire la grandeur physique mesurée par le capteur inertiel, peut différer.

Le capteur inertiel peut ainsi être vu comme un interféromètre à atomes froids. Trois séquences particulières vont maintenant être décrites.

La première séquence d'interférométrie exposée conduit le capteur inertiel à fonctionner selon un premier mode de fonctionnement. Le premier mode de fonctionnement est un fonctionnement d'horloge et la grandeur physique mesurée est une fréquence.

Un interféromètre à atomes froids fait interférer deux états électroniques d'un atome dans une séquence de Ramsey.

Le premier état noté $|a\rangle$ alors que le deuxième état est noté $|b\rangle$.

Une séquence d'interférométrie de Ramsey a pour but de mesurer une phase $\varphi$ accumulée lors de la mise en œuvre de la séquence, à partir d'une mesure d'au moins une population de l'un des états $|a\rangle$ ou $|b\rangle$.

De préférence, pour augmenter la précision, la mesure de la phase $\varphi$ est réalisée à partir de la mesure des deux populations.

Dans le cas d'une séquence de Ramsey de type horloge, la phase en sortie de l'interféromètre est donnée par :

$$\varphi_{interf} = \varphi_a - \varphi_b = (\omega - \omega_{ab})T_R$$

Où :

- $\varphi_{interf}$ est la phase en sortie de l'interféromètre,
- $\varphi_a$ est la phase des atomes dans le premier état $|a\rangle$,
- $\varphi_b$ est la phase des atomes dans le deuxième état $|b\rangle$,
- $\omega$ est la pulsation de l'oscillateur local, l'oscillateur local étant typiquement un générateur de signaux microondes,
- $\omega_{ab}$ est la pulsation correspondant à la différence de fréquence entre le premier état $|a\rangle$ et le deuxième état $|b\rangle$. La pulsation $\omega_{ab}$ est ainsi définie par $\omega_{ab} = \omega_a - \omega_b$ où $\hbar\omega_a$ désigne l'énergie électronique du premier état $|a\rangle$ ($\hbar$ étant la constante de Planck réduite) et $\hbar\omega_b$ désigne l'énergie électronique du deuxième état $|b\rangle$, et
- $T_R$ est le temps de Ramsey qui est également la durée de libre évolution.

Un deuxième mode de fonctionnement est un fonctionnement d'accéléromètre.

La séquence d'interférométrie du premier mode de fonctionnement est modifiée pour que les atomes dans le premier état $|a\rangle$ et dans le deuxième état $|b\rangle$ décrivent chacun une trajectoire rectiligne en aller-retour en partant d'un même point de départ, les deux trajectoires et le point de départ étant alignés selon une droite notée Dr.

Avec une telle séquence d'interférométrie, un terme de déphasage sensible à l'accélération selon la droite Dr apparaît du fait de la différence d'énergie potentielle d'accélération entre les deux états $|a\rangle$ et $|b\rangle$. Cette différence d'énergie potentielle d'accélération correspond au fait que les niveaux d'énergie des deux états $|a\rangle$ et $|b\rangle$ ont été déplacés avec la séparation spatiale des deux états.

La deuxième séquence d'interférométrie exposée conduit le capteur inertiel à fonctionner selon un deuxième mode de fonctionnement. Le deuxième mode de fonctionnement est un fonctionnement d'accéléromètre et la grandeur physique mesurée est une valeur d'accélération selon un axe.

On suppose que la séparation se fait selon la droite Dr et qu'une accélération est présente durant une durée de séparation des états. Sous ces hypothèses, la phase en sortie de l'interféromètre s'écrit :

$$\varphi_{interf} = (\omega - \omega_{ab})T_R + \frac{m}{\hbar}\int_O^{T_{sep}} ac.(x_a(t) - x_b(t))dt$$

Où:

- $m$ désigne la masse de l'atome,
- $T_{sep}$ désigne la durée de séparation des états, avec $T_{sep} \leq T_R$,
- $ac$ désigne la valeur de l'accélération présente pendant la durée de séparation,
- $x_a(t)$ est la position des atomes dans le premier état $|a\rangle$ le long de la droite Dr, et
- $x_b(t)$ est la position des atomes dans le deuxième état $|b\rangle$ le long de la droite Dr.

Il peut être considéré que les durées de séparation et de recombinaison sont négligeables devant la durée où la séparation est maintenue, c'est-à-dire que les quantités $T_{sep}$ et $T_R$ sont sensiblement égales. Avec cette hypothèse, les positions $x_a(t)$ et $x_b(t)$ ne dépendent plus du temps.

Il vient ainsi :

$$\varphi_{interf} = (\omega - \omega_{ab})T_R + \frac{m}{\hbar}ac.\Delta x.T_R$$

Où :

- $\Delta x$ est la différence de position entre les atomes dans les deux états, c'est-à-dire que $\Delta x = x_a - x_b$, où $x_a$ est la position extrême occupée par le premier nuage et $x_b$ est la position extrême occupée par le deuxième nuage.

Cette expression peut se réécrire ainsi :

$$\varphi_{interf} = \left\{ \omega - \left( \omega_{ab} - \frac{m.ac.\,\Delta x}{\hbar} \right) \right\} T_R$$

La mesure de la phase en sortie de l'interféromètre permet donc d'accéder à la valeur de l'accélération selon la droite Dr, les autres paramètres étant connus.

Il ressort également de cette formule que le déphasage $\varphi_{acc}$ causé par l'accélération *ac* s'écrit :

$$\varphi_{acc} = \frac{m.ac.\Delta x}{\hbar} T_R$$

La sensibilité *S* du capteur inertiel qui correspond au rapport entre la valeur de sortie et la valeur d'entrée est ainsi donnée par la formule suivante :

$$S = \frac{m.\Delta x}{\hbar} T_R$$

La sensibilité *S* du capteur inertiel dans le deuxième mode de fonctionnement peut donc être modifiée en variant la différence de position $\Delta x$ et la durée de libre évolution $T_R$.

Ainsi, pour obtenir un fonctionnement d'accéléromètre, il convient de réaliser deux trajectoires en aller-retour rectilignes et alignées parcourues respectivement par les deux nuages d'atomes piégés magnétiquement.

Le déplacement du piège magnétique selon les trajectoires est réalisé par des fils/éléments conducteurs et des guides micro-ondes disposés sur et dans une puce atomique.

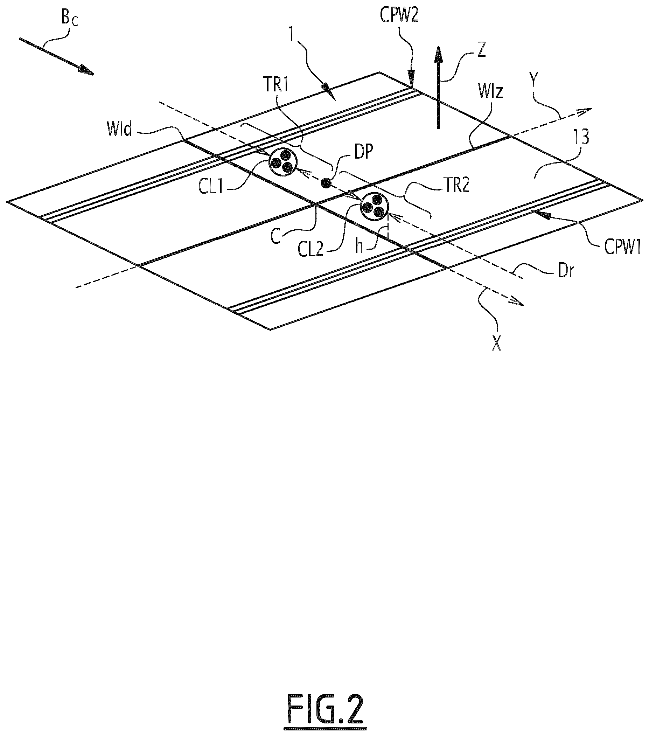

Un tel agencement est par exemple l'agencement de la figure 2.

La surface de la puce définit un plan XY ou plan de mesure 13, normal à un axe Z.

La puce 1 comprend des moyens adaptés à générer un premier piège à atomes ultrafroids T1 et un deuxième piège à atomes ultrafroids T2, un piège permettant d'immobiliser un nuage d'atomes ultrafroids dans un état différent de l'autre piège, à une distance prédéterminée h du plan de mesure 13.

Par exemple, le piège T1 comprend les atomes dans le premier niveau électronique ou premier état |a⟩ (nuage CL1) et le piège T2 comprend des atomes dans le deuxième état |b⟩ (nuage CL2).

Les niveaux correspondants aux états |a⟩ et |b⟩ sont espacés d'une fréquence $\frac{\omega_{ab}}{2\pi}$ .

Par exemple, dans le cas du rubidium 87 il s'agit des deux niveaux hyperfins $|F = 1, m_F = -1\rangle$ et $|F = 2, m_F = 1\rangle$, espacés d'environ 6,8 GHz.

Ces moyens permettent également de déplacer les nuages selon des trajectoires TR1 et TR2 localisées dans un plan parallèle au plan de mesure 13, à une distancer h de ce plan, tel qu'illustré figure 2.

Une distance h sépare ainsi le plan des trajectoires et le plan de mesure 13 de la puce.

La distance h est typiquement comprise entre 500 nanomètres (nm) et 1 millimètre (mm), et préférentiellement comprise entre 5 micromètres ($\mu$m) et 500 $\mu$m.

Comme visible sur la figure 2, ces moyens sont des guides d'ondes et des fils conducteurs.

Les guides d'ondes CPW1 et CPW2 sont adaptés à la propagation de micro-ondes à des pulsations $\omega_a$ et $\omega_b$.

Les guides d'ondes CPW1 et CPW2 sont disposés symétriquement par rapport à un axe Y du plan de mesure, préférentiellement parallèles.

Les deux guides d'ondes CPW1 et CPW2 sont connectés à au moins un générateur de tension ou de courant à fréquences micro-ondes.

Par exemple, chacun des guides d'ondes est réalisé par le dépôt de trois fils conducteurs parallèles pour réaliser un guide d'ondes coplanaire.

Dans d'autres réalisations, d'autres types de guides d'ondes sont utilisés, en particulier des guides d'ondes dont la fabrication est compatible avec les techniques de micro fabrication par dépôt ou par gravure.

Par exemple, les guides d'ondes sont une ligne à microruban.

Les fils conducteurs intégrés à la puce 1 sont adaptés à être traversés par des courants continus.

Selon l'exemple décrit, les fils conducteurs sont répartis en un fil conducteur Wlz selon un axe de symétrie Y perpendiculaire à X et compris dans le plan de mesure 13, et en un fil conducteur Wld, parallèle à l'axe X.

Les fils sont agencés de manière à définir un point de croisement C (croisement entre Wlz et Wld) localisé sur l'axe Y.

Chaque fil conducteur est relié à un ou plusieurs générateurs de courant et/ou de tension, eux-mêmes reliés à une unité de traitement comportant au moins un microprocesseur.

Les générateurs de tension et/ou de courant permettent de piloter aussi bien des courants continus que des courants alternatifs dans les fils.

En particulier, des courants continus sont pilotés dans les fils conducteurs.

Dans le capteur considéré, la puce à atomes 1 est placée dans une enceinte à vide. Le vide est entretenu, par exemple, à l'aide d'une pompe ionique.

L'enceinte à vide comporte préférentiellement un blindage magnétique.

Le capteur formant ici accéléromètre comporte un dispositif de génération d'atomes ultrafroids qui comprend :

- un émetteur d'atomes (dispenser en anglais), par exemple réalisé par un filament chauffant délivrant une vapeur de rubidium ;
- un piège primaire à atomes (optique et/ou magnétique), permettant de pré-refroidir et de disposer un nuage d'atomes ultrafroids au voisinage de la puce, pour charger en atomes les pièges magnétiques T1 et T2 décrits ultérieurement.

Le capteur comprend également une source de champ magnétique, extérieure à la puce 1.

La source de champ magnétique permet d'imposer un champ magnétique homogène et stationnaire Bc sur une épaisseur au moins de l'ordre d'une hauteur h au-dessus du plan de mesure 13.

Avantageusement, la direction du champ magnétique homogène Bc est parallèle au plan de mesure.

Sur la figure 2, les trajectoires TR1 et TR2 en pointillés illustrent respectivement la trajectoire des nuages d'atomes ultrafroids CL1 et CL2.

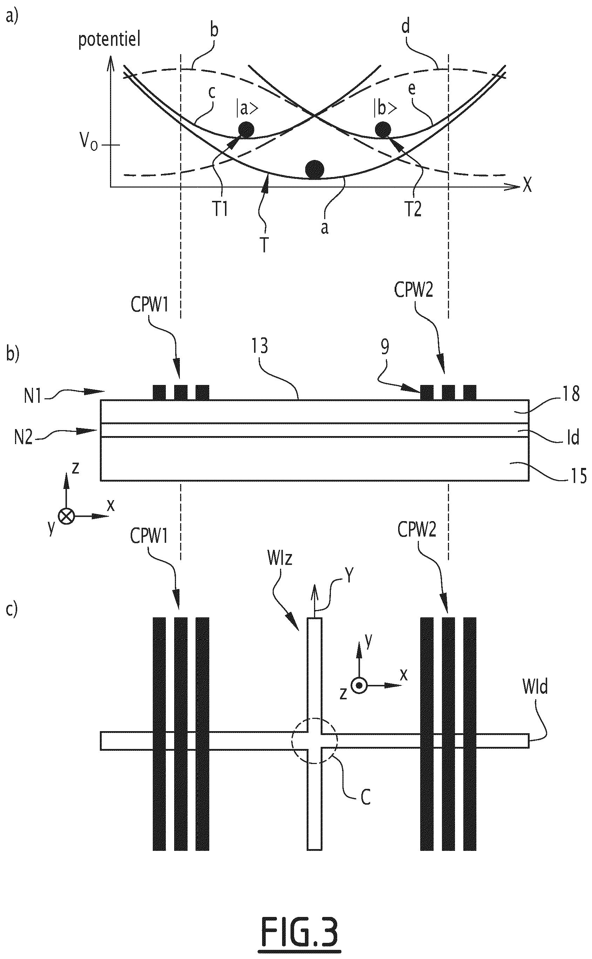

La figure 3 illustre plus précisément la géométrie des guides et fils de la puce atomique ainsi que les pièges T1 et T2.

L'agencement spécifique des fils conducteurs et des guides d'ondes, associé à la source de champ magnétique homogène, permet d'obtenir aisément deux pièges T1 et T2 tels qu'illustrés dans la partie a) de la figure 3.

Chaque piège T1 et T2 présente une valeur de potentiel minimum V0 non nulle et identique, et une courbure identique pour que le capteur fonctionne au mieux.

En effet, lorsqu'un courant continu est appliqué sur les deux fils conducteurs se croisant en C, le minimum de potentiel est localisé à la verticale de ce point de croisement. Lorsqu'ensuite une puissance hyperfréquence est envoyée dans les guides d'ondes, le minimum central se transforme en deux minima de part et d'autre du minimum initial dans la direction des guides d'ondes.

Si le minimum initial n'est pas situé strictement à égal distance des deux guides d'ondes, les deux minima de potentiels créés n'auront pas rigoureusement la même valeur du minimum V0 et la même courbure.

La partie c) de la figure 3 illustre la disposition des fils conducteurs définissant le point de croisement initial C et des guides d'ondes (vue de dessus).

La partie b) de la figure 3 décrit la disposition correspondante des fils conducteurs et des guides d'ondes imprimés sur une puce en vue de profil, en coupe selon le fil conducteur Wld qui croise le fil conducteur Wlz selon l'axe de symétrie Y.

Les guides d'ondes CPW1 et CPW2 sont des guides d'ondes coplanaires situés sur un premier niveau N1.

La couche 18 isolante permet avantageusement d'aplanir le plan de mesure.

Le matériau de la couche d'isolant électrique est, par exemple, du dioxyde de silicium, du nitrure de silicium ou benzocyclobutène.

Un matériau conducteur est utilisé pour la fabrication des fils conducteurs, par exemple de l'or, et est déposé sur un substrat 15, formant un deuxième niveau N2.

Le substrat est, par exemple, en silicium, en nitrure d'aluminium ou en carbure de silicium.

La partie a) de la figure 3 permet de visualiser la séparation symétrique d'atomes ultrafroids, spécifique à l'état interne des atomes ultrafroids, et plus précisément les variations de potentiels en fonction de l'axe X de la puce 1.

La courbe « a » présente un puits de potentiel correspondant à l'association du champ magnétique homogène et du champ créé par les deux fils conducteurs sécants, le fil Wlz parcouru par le courant $I_z$ et le fil Wld parcouru par le courant $I_d$.

Il résulte un puits de potentiel local, potentiel initial Vini formant un piège atomique T selon trois dimensions. Un nuage d'atomes ultrafroids peut y être piégé et refroidis.

La courbe « b » présente de manière schématique le potentiel créé par la transmission de micro-ondes à la pulsation $\omega_b$ dans le guide d'ondes CPW1.

Le champ émis par le passage de micro-ondes à la pulsation $\omega_b$ permet de modifier l'énergie des atomes ultrafroids et de déplacer les atomes dans le deuxième état $|b\rangle$.

La courbe « e » illustre le potentiel vu par les atomes dans le deuxième état $|b\rangle$ du fait des contributions des potentiels illustrés par la courbe « a » et par la courbe « b ».

La courbe « e » présente un minimum local de potentiel permettant de piéger localement un nuage d'atomes ultrafroids dans le deuxième état $|b\rangle$.

De manière similaire, la courbe « d » présente de manière schématique le potentiel créé par la transmission de micro-ondes à la pulsation $\omega_a$ dans le guide d'ondes CPW2. Le champ émis par le passage de micro-ondes à la pulsation $\omega_a$ permet de modifier l'énergie des atomes ultrafroids et de déplacer les atomes dans le premier état $|a\rangle$.

La courbe « c » illustre le potentiel vu par les atomes dans le premier état $|a\rangle$ du fait des contributions des potentiels illustrés par la courbe « a » et par la courbe « d ».

La courbe « c » présente un minimum local d'énergie permettant de piéger localement un nuage d'atomes ultrafroids dans le premier état $|a\rangle$.

L'association d'un piège magnétique DC (créé par les courants continus dans les fils et le champ homogène Bc) et d'un champ micro-onde crée un piège « habillé ».

Un piège « habillé » est un piège créé au moins en partie par un champ oscillant micro-onde, radio-fréquence ou optique.

Les changements des champs micro-ondes (puissance, fréquence et guide dans lequel les champs se propagent) permettent de déplacer ce piège habillé et donc de déplacer les atomes.

Le piège magnétique DC est représenté sur la figure 3 par la courbe a. Le champ micro-onde à la pulsation $\omega_a$ est représenté sur la figure 3 par la courbe d et le champ micro-onde à la pulsation $\omega_b$ est représenté sur la figure 3 par la courbe b. Le piège habillé T1 (association des courbes a et d) pour le premier état $|a\rangle$ est représenté par la courbe c et le piège habillé T2 (association des courbes a et b) pour le deuxième état $|b\rangle$ est représenté par la courbe e.

Les nuages d'atomes ultrafroids d'états $|a\rangle$ et $|b\rangle$ peuvent être séparés et piégés de manière symétrique par rapport à l'axe de symétrie Y en imposant simultanément la propagation d'ondes de pulsation $\omega_a$ dans le guide d'ondes CPW2 et de pulsation $\omega_b$ dans le guide d'ondes CPW1.

Pour obtenir deux pièges dont les minima sont de même valeur V0 et dont les courbures sont de même valeur, il est souhaitable que le point de croisement C soit disposé à égal distance des guides d'ondes CPW1 et CPW2, sur l'axe de symétrie Y.

Les pulsations $\omega_a$ et $\omega_b$ sont choisies en fonction des énergies des deux états $|a\rangle$ et $|b\rangle$.

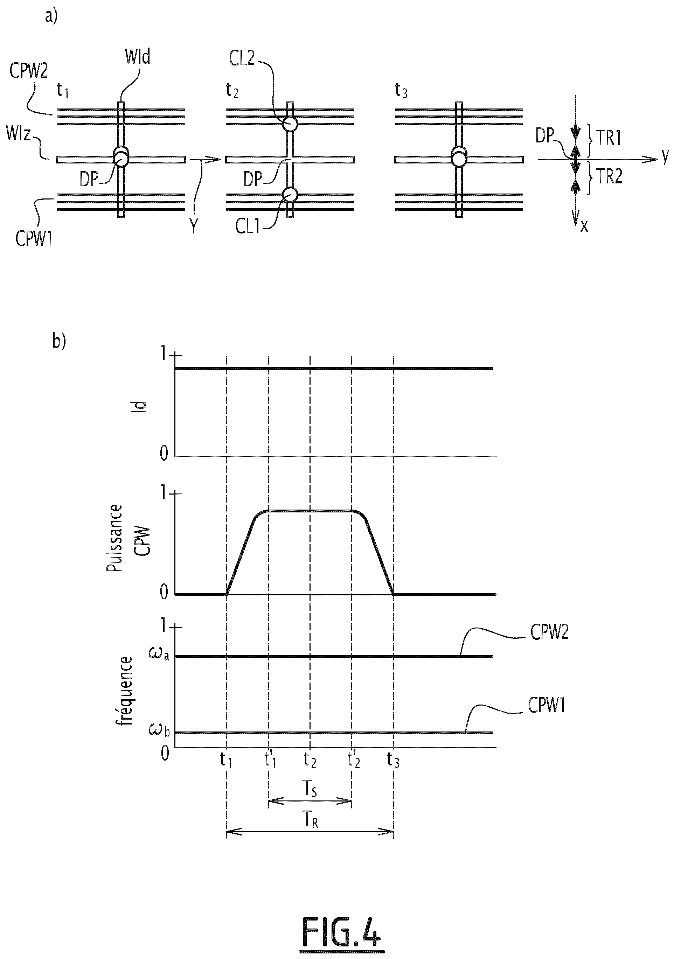

La figure 4 illustre dans sa partie inférieure b) un exemple d'application des différents signaux aux fils et guides pour faire parcourir, dans le cas d'un capteur fonctionnant comme un accéléromètre, les trajectoires linéaires aux deux pièges T1 et T2 (et donc aux deux nuages d'atomes piégés), et dans sa partie supérieure a) la position des deux nuages correspondant à des temps choisis.

Ainsi la partie a) de la figure 4 présente schématiquement une séquence du déplacement de chacun des nuages d'atomes ultrafroids à des instants caractéristiques $t_1$ à $t_3$.

La partie b) illustre la séquence des différents courants appliqués aux fils conducteurs, des puissances appliquées aux guides d'ondes et des fréquences imposées aux guides d'ondes, pour les temps correspondant à ceux de la partie a).

Dans la séquence présentée dans la figure 4, le courant $I_z$, non présenté, circulant dans WIz est stationnaire, à une valeur constante.

Le courant appliqué à WId est également constant pendant toute la séquence.

La séquence d'interférométrie comporte une pluralité d'étapes A0 à F0 qui sont maintenant décrites.

Lors d'une étape A0, il y a une phase de préparation des atomes. Un nuage d'atomes ultrafroids est généré par mise en œuvre notamment d'une étape d'émission desdits atomes, d'une étape de refroidissement desdits atomes, d'une étape d'initialisation desdits atomes dans au moins un état parmi les états $|a\rangle$ et $|b\rangle$ et une étape de piégeage d'un nuage de dits atomes ultrafroids dans un minimum local de potentiel, à une distance h du plan de mesure (piège T, courbe « a » de la figure 3 partie a)).

La hauteur h est différente de 0 car le champ magnétique homogène Bc est non nul.

Le piégeage s'effectue en appliquant des courants continus dans le fil WIz et dans le fil WId, et en y superposant un champ magnétique de biais Bc parallèle au plan de la puce atomique (génération de Vini).

Le nuage d'atomes est alors piégé par le potentiel Vini à la verticale de C, intersection des fils WIz et WId.

Cette étape A0 se déroule entre 0 et l'instant $t_1$ de la figure 4 partie b).

Lors d'une étape B0, les états des atomes sont initialisés en superposant de manière cohérente les atomes ultrafroids entre les états $|a\rangle$ et $|b\rangle$ par une première impulsion $\pi/2$.

La première impulsion $\pi/2$ est, selon les modes de réalisation, réalisée par un laser, une émission micro-ondes, ou plus généralement par une technique émettant des ondes à une fréquence de transition adaptée.

Les courants $I_z$ et $I_d$ sont imposés respectivement aux fils conducteurs WIz et WId.

Les deux états $|a\rangle$ et $|b\rangle$ sont superposés de manière cohérente et spatialement à l'aplomb du point de croisement C.

Dans une étape C0, on sépare spatialement le nuage initial en un premier nuage d'atomes ultrafroids CL1 dans le premier état $|a\rangle$ et un deuxième nuage d'atomes ultrafroids CL2 dans le deuxième état $|b\rangle$, en formant un premier piège à atomes ultrafroids T1 et un deuxième piège T2.

Cette étape C0 est illustrée par la partie entre les instants $t_1$ et $t'_1$ de la figure 4 partie b).

Dans une étape D0, la séparation des deux pièges est maintenue pendant un temps $T_S$ (entre les instants $t'_1$ à $t'_2$)

puis les pièges sont recombinés audit point de départ (entre les instants t'$_2$ et t$_3$).

Pendant les étapes C0 et D0, les deux nuages parcourent respectivement une première trajectoire TR1 et une deuxième trajectoire TR2 linéaires parallèles au plan XY à partir du point de départ DP.

Lors d'une étape E0, les deux états |a⟩ et |b⟩ sont recombinés en appliquant aux atomes ultrafroids une deuxième impulsion π/2.

La deuxième impulsion π/2 transfère la différence de phase sur les populations des deux niveaux atomiques.

Les impulsions π/2 peuvent être envoyées aux atomes via les guides micro-ondes ou via un émetteur micro-onde séparé.

La séquence allant de la première impulsion π/2 à la deuxième impulsion π/2 incluse est la séquence de Ramsey.

Puis, dans une étape F0, la phase en sortie comprenant notamment une contribution de la différence d'énergie potentiel d'accélération entre les deux états |a⟩ et |b⟩ des atomes ultrafroids est mesurée et l'accélération du capteur selon l'axe X est calculée.

En considérant uniquement la séquence de Ramsey de durée $T_R$ entre les instants t$_1$ et t$_3$, au départ à l'instant t$_1$ aucune puissance n'est appliquée aux guides d'ondes et le nuage est piégé au-dessus du point C.

Entre les instants t$_1$ et t'$_1$, la puissance micro-ondes injectée dans les guides d'ondes CPW1 et CPW2, passe progressivement de 0 à sa valeur maximale, puis la valeur reste maximale et constante entre les instants t'$_1$ et t'$_2$ en passant par l'instant t$_2$. Une micro-onde à une pulsation $\omega_a$ est envoyée dans le guide d'ondes CPW2 et une autre à une pulsation $\omega_b$ est envoyée dans le guide d'ondes CPW1, ce qui permet de séparer les deux nuages d'états internes différents de part et d'autre de l'axe de symétrie Y jusqu'aux positions schématisées à l'instant t$_2$, ces positions étant maintenues pendant tout l'intervalle de temps les entre instants t'$_1$ et t'$_2$, qui peut être faible.

Entre les instants t'$_2$ et t$_3$, la puissance micro-onde dans les guides d'ondes est progressivement coupée. Les deux pièges T1 et T2 se déplacent jusqu'à fusionner en un seul piège se situant au point de départ schématisé à l'instant t$_3$ (partie a)).

La troisième séquence d'interférométrie exposée conduit le capteur inertiel à fonctionner selon un troisième mode de fonctionnement. Le troisième mode de fonctionnement est un fonctionnement de gyromètre et la grandeur physique mesurée est une valeur de vitesse angulaire selon un axe.

La séquence d'interférométrie du premier mode de fonctionnement est modifiée pour que les atomes dans le premier état |a⟩ et dans le deuxième état |b⟩ décrivent chacun la même trajectoire fermée contenant une aire non nulle mais parcourue dans des sens opposés.

Avec une telle séquence, un terme de déphasage sensible aux rotations selon la normale à la surface comprenant la trajectoire apparaît avec l'effet Sagnac. Cela correspond à un fonctionnement de gyromètre.

Plus précisément, si la trajectoire décrite par les atomes dans le premier état |a⟩ est parcourue dans le sens horaire alors que la trajectoire décrite par les atomes dans le deuxième état |b⟩ est parcourue dans le sens antihoraire, le déphasage s'écrit :

$$\varphi_{interf} = (\omega - \omega_{ab})T_R + \frac{m}{\hbar}\int_0^{T_R}[\boldsymbol{\Omega_z}(\boldsymbol{r_a} \wedge \boldsymbol{v_a}) + (\boldsymbol{\Omega_z} \wedge \boldsymbol{r_a})^2 + \boldsymbol{a}.\boldsymbol{r_a}]dt - \frac{m}{\hbar}$$

$$\int_0^{T_R}[\boldsymbol{\Omega_z}(\boldsymbol{r_b} \wedge \boldsymbol{v_b}) + (\boldsymbol{\Omega_z} \wedge \boldsymbol{r_b})^2 + \boldsymbol{a}.\boldsymbol{r_b}]dt$$

Où :

- $\boldsymbol{\Omega_z}$ est la vitesse angulaire autour d'un axe z, l'axe z étant un axe perpendiculaire au plan de la trajectoire,
- $\boldsymbol{r_a}$ désigne la position des atomes dans le premier état |a⟩ dans un référentiel fixé au capteur,
- $\boldsymbol{v_a}$ désigne la vitesse des atomes dans le premier état |a⟩ dans le référentiel fixé au capteur,
- $\boldsymbol{a}$ désigne l'accélération que subit le capteur, cette accélération étant dirigée selon l'axe de séparation des deux états,
- $\boldsymbol{r_b}$ désigne la position des atomes dans le deuxième état |b⟩ dans le référentiel fixé au capteur, et
- $\boldsymbol{v_b}$ désigne la vitesse des atomes dans le deuxième état |b⟩ dans le référentiel fixé au capteur.

Pour une trajectoire formant une boucle où chaque état revient à sa position initiale en fin de la séquence, il peut être montré que, si l'accélération a est constante, les termes $\boldsymbol{a}.\boldsymbol{r_a}$ et $\boldsymbol{a}.\boldsymbol{r_b}$ sont égaux à 0 et les termes $(\boldsymbol{\Omega_z} \wedge \boldsymbol{r_a})^2$ et $(\boldsymbol{\Omega_z} \wedge \boldsymbol{r_b})^2$ s'annulent.

En supposant par ailleurs que la vitesse angulaire $\boldsymbol{\Omega_z}$ est constante pendant le temps d'évolution libre $T_R$, la phase en sortie de l'interféromètre s'écrit alors :

$$\varphi_{interf} = (\omega - \omega_{ab})T_R + \frac{4m\boldsymbol{\Omega_z}.\boldsymbol{AN}}{\hbar}T_R$$

C'est-à-dire

$$\varphi_{interf} = \left(\omega - \omega_{ab} + \frac{4m\boldsymbol{\Omega_z}.\boldsymbol{AN}}{\hbar}\right)T_R$$

Où :

- A est un vecteur normal à la surface décrite par les trajectoires des deux états et dont la norme est égale à l'aire de la surface délimitée par les trajectoires, et
- $N$ le nombre de tours (boucles fermées) que les atomes ont réalisés pendant le temps $T_R$.

La mesure de la phase en sortie de l'interféromètre permet donc d'accéder à la valeur de la vitesse de rotation selon l'axe z, les autres paramètres étant connus.

Il ressort également de cette formule que le déphasage $\varphi_{rot}$ causé par la rotation selon l'axe z s'écrit :

$$\varphi_{rot} = \frac{4m\boldsymbol{\Omega_z}.\boldsymbol{AN}}{\hbar}T_R$$

La sensibilité $S$ du capteur inertiel qui correspond au rapport entre la valeur de sortie et la valeur d'entrée est ainsi donnée par la formule suivante :

$$S = \frac{4m\boldsymbol{AN}}{\hbar}T_R$$

La sensibilité $S$ du capteur inertiel dans le troisième mode de fonctionnement peut donc être modifiée en variant l'aire $\|\boldsymbol{A}\|$ de l'espace délimité par les trajectoires, le nombre de tours N et la durée de libre évolution $T_R$.

Ainsi, pour obtenir un fonctionnement de gyromètre, il convient de réaliser une trajectoire parcourue de manière contrapropagative par deux nuages d'atomes piégés magnétiquement.

La réalisation et le déplacement du piège magnétique selon la trajectoire sont réalisés par des fils/éléments conducteurs et des guides micro-ondes disposés sur et dans la puce atomique.

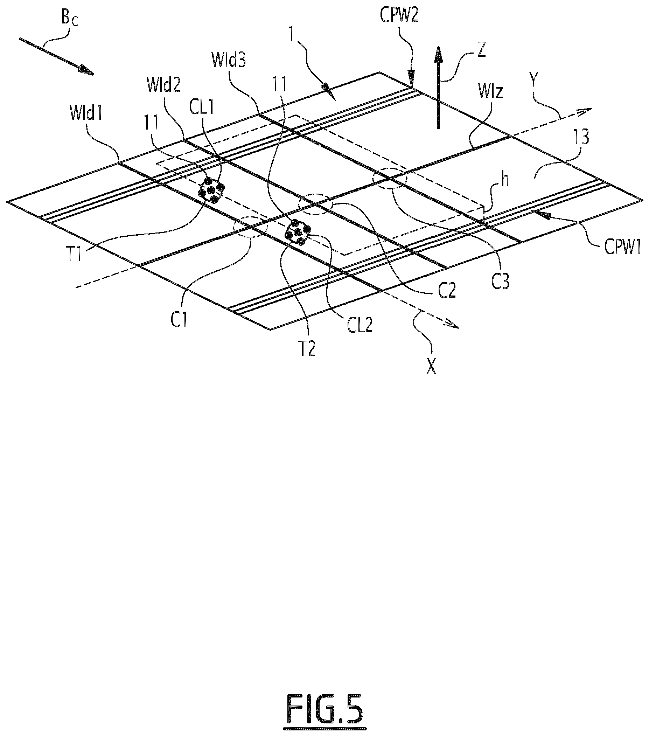

Un tel agencement est par exemple l'agencement de la figure 5.

L'agencement décrit est assez similaire à celui décrit en référence à la figure 2, de sorte que des remarques similaires s'appliquent pour les éléments correspondants.

Seules les différences sont donc mises en avant ci-après.

Au lieu d'un fil conducteur Wld, la puce 1 comporte ici une pluralité de fils conducteurs.

Ainsi, les fils conducteurs sont répartis en le fil conducteur Wlz selon un axe de symétrie Y perpendiculaire à X et compris dans le plan de mesure 13, et en une pluralité de n fils conducteurs Wldi, i indice variant de 1 à n, parallèles entre eux et parallèles à l'axe X, n étant au moins égal à 2.

Dans l'exemple de la figure 1, n=3 ce qui implique la présence de trois fils conducteurs Wld1, Wld2 et Wld3.

Les fils sont agencés de manière à définir n points de croisement Ci (croisement entre Wlz et Wldi) localisés sur l'axe Y, ici 3 points de croisement C1, C2, C3.

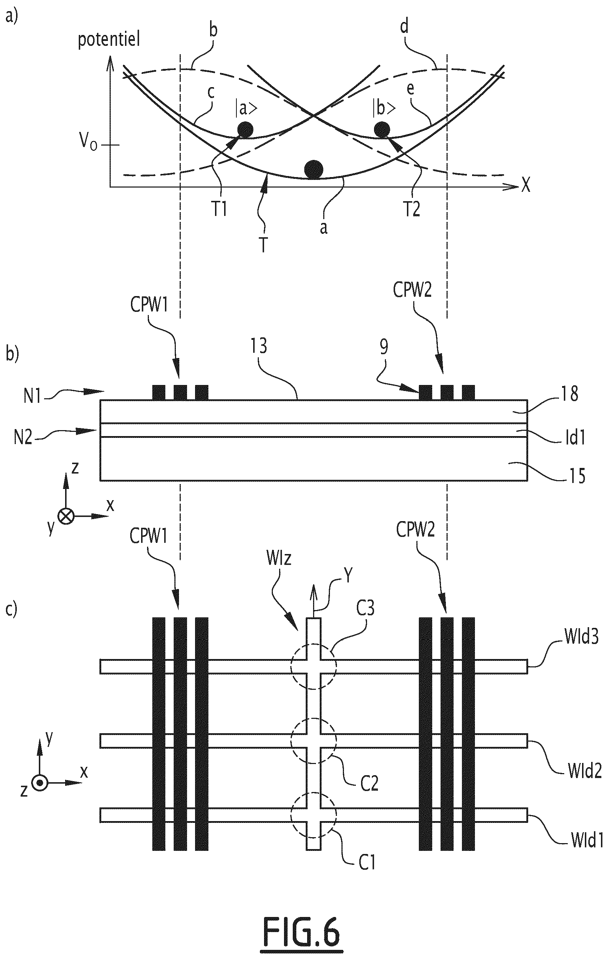

Sur la figure 6, la trajectoire de $|a\rangle$ est différente de celle de $|b\rangle$ et définit une aire notée A.

La figure 6 correspond à la figure 3 pour le premier fil conducteur Wld1. Les mêmes remarques sont donc valables et ne sont pas répétées.

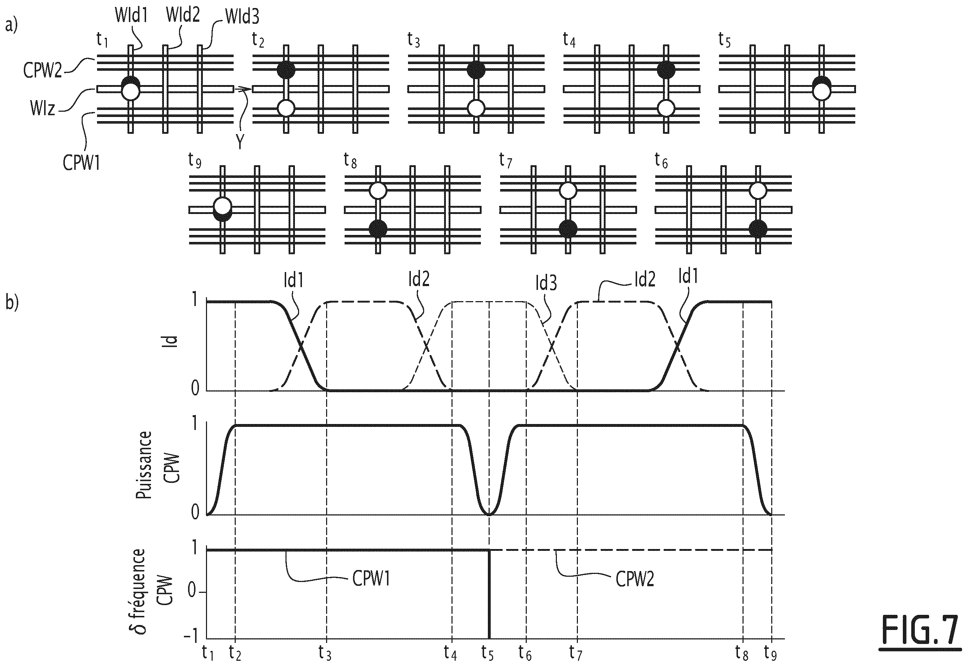

La figure 7 illustre la séquence permettant la génération de la trajectoire 16.

La partie a) de la figure 7 présente schématiquement une séquence du déplacement de chacun des nuages d'atomes ultrafroids à des instants caractéristiques $t_1$ à $t_9$.

La partie b) illustre de manière complémentaire une séquence des différents courants appliqués aux fils conducteurs, des puissances appliquées aux guides d'ondes et des fréquences imposées aux guides d'ondes, pour les temps correspondant à ceux de la partie a).

Dans la séquence présentée dans la figure 7, le courant $I_z$, non présenté, circulant dans Wlz est stationnaire, à une valeur constante. Dans la partie b) les valeurs des courants, des puissances et des fréquences sont arbitraires.

L'ordonnée $\delta$ fréquence correspond à une variation de fréquence exprimée en unité arbitraire, autour d'une valeur moyenne de la fréquence.

Les courants parcourant les fils conducteurs peuvent être compris entre 100 $\mu$A et 10 A, et les pulsations injectées dans les guides d'ondes peuvent être comprises entre 6,6 GHz et 7 GHz dans le cas où des atomes de rubidium sont utilisés.

La séquence d'interférométrie comporte une pluralité d'étapes A0 à E0 qui sont maintenant décrites.

Lors d'une étape A0, les atomes sont préparés et un nuage d'atomes ultrafroids 11 est généré. L'étape A0 comporte une étape d'émission desdits atomes, une étape de refroidissement desdits atomes, une étape d'initialisation desdits atomes dans au moins un état $|a\rangle$ et une étape de piégeage d'un nuage de dits atomes ultrafroids dans un minimum local de potentiel, à une distance h du plan de mesure (piège T, courbe « a » de la figure 6 partie a)).

Le piégeage s'effectue par passage de courants continus dans le fil WIz et dans un des fils WIdi, le point de croisement de ces deux fils définissant le point de départ (ici C1 avec WId1).

Un champ magnétique de biais Bc parallèle au plan de la puce atomique qui se superpose au champ magnétique crée par les deux fils précédents est simultanément appliqué. Le nuage d'atomes est alors piégé par le potentiel Vini à la verticale de C1, intersection des fils WIz et WId1.

Lors d'une étape B0, les états sont initialisés en superposant de manière cohérente les atomes ultrafroids entre les états $|a\rangle$ et $|b\rangle$ par une première impulsion $\pi/2$.

La première impulsion $\pi/2$ peut être réalisée par un laser, une émission micro-ondes, ou plus généralement par une technique émettant des ondes à une fréquence de transition adaptée.

Les courants $I_Z$ et $I_{d1}$ sont imposés respectivement aux fils conducteurs WIz et WId1.

Les deux états $|a\rangle$ et $|b\rangle$ sont superposés de manière cohérente et spatialement à l'aplomb du point de croisement C1.

Lors d'une étape C0, un nuage d'atomes dans le premier état $|a\rangle$ dans un piège T1 est séparé spatialement d'un nuage d'atomes dans le deuxième état $|b\rangle$ dans un autre piège T2.

Les pièges sont déplacés en sens opposé suivant une trajectoire fermée contenue dans un plan perpendiculaire à l'axe de mesure Z.

Le nuage d'atomes dans le premier état $|a\rangle$ est symbolisé par un disque de texture claire et le nuage d'atomes dans le deuxième état $|b\rangle$ est symbolisé par un disque de texture plus foncée.

Cette étape C0 est réalisée dans l'exemple de la figure 7 à partir de l'instant $t_1$ jusqu'à l'instant $t_9$.

Entre les instants $t_1$ et $t_2$, la puissance micro-ondes injectée dans les guides d'ondes CPW1 et CPW2, passe progressivement de 0 à sa valeur maximale.

Une micro-onde à une pulsation $\omega_b$ est envoyée dans le guide d'ondes CPW1 et une autre pulsation $\omega_a$ est envoyée dans le guide d'ondes CPW2, ce qui permet de séparer les deux nuages d'états internes différents de part et d'autre de l'axe de symétrie Y, d'une distance d, jusqu'aux positions schématisées à l'instant $t_2$.

Le piège T à atomes ultrafroids décrit précédemment à l'instant $t_1$ est alors transformé en deux pièges T1 et T2 à atomes ultrafroids, chaque piège permettant d'immobiliser un nuage d'atomes ultrafroids d'états internes différents de l'autre piège (en l'occurrence dans le premier état $|a\rangle$ dans l'un des pièges, par exemple T1, et dans le deuxième état $|b\rangle$ dans l'autre piège T2, comme décrit dans la partie a) de la figure 7).

Un point de croisement Ci correspond au croisement du fil WIz avec le fil WIdi.

Entre les instants $t_2$ et $t_3$, le courant $I_{d1}$ est progressivement coupé et $I_{d2}$ est progressivement porté à sa valeur maximale (l'intervalle de temps séparant les instants $t_2$ et $t_3$ est typiquement de l'ordre de 10 ms et peut être compris entre 0,1 ms et 100 ms) : les deux pièges T1 et T2 sont déplacés vers la droite jusqu'aux positions schématisées à l'instant $t_3$.

Entre les instants $t_3$ et $t_4$, le courant $I_{d2}$ est progressivement coupé et le courant $I_{d3}$ est progressivement porté à sa valeur maximale : les deux pièges sont déplacés vers la droite jusqu'aux positions schématisées à l'instant $t_4$.

Entre les instants $t_4$ et $t_5$, la puissance micro-onde est progressivement coupée : les deux pièges sont ramenés au même endroit de la puce, schématisé à l'instant $t_5$.

A l'instant $t_5$, les pulsations appliquées aux deux guides micro-ondes sont modifiées : une micro-onde à la pulsation $\omega_a$ est imposée dans CPW1 et une autre à la pulsation $\omega_b$ est imposée dans CPW2.

Entre les instant $t_5$ et $t_6$, la puissance dans les deux guides d'ondes passe progressivement de 0 à sa valeur maximale : les pièges sont séparés dans la direction verticale comme schématisé à l'instant $t_6$.

Entre les instants $t_6$ et $t_7$, le courant $I_{d3}$ est progressivement coupé et le courant $I_{d2}$ est progressivement porté à sa valeur maximale : les deux pièges T1 et T2 sont déplacés vers la gauche jusqu'aux positions schématisées à l'instant $t_7$.

Entre les instants $t_7$ et $t_8$, le courant $I_{d2}$ est progressivement coupé et le courant $I_{d1}$ est progressivement porté à sa valeur maximale: les deux pièges sont déplacés vers la gauche jusqu'aux positions schématisées à l'instant $t_8$.

Cette opération peut être répétée plusieurs fois avec d'autres premiers fils conducteurs pour augmenter l'aire incluse dans la trajectoire.

Entre les instants $t_8$ et $t_9$, la puissance micro-onde dans les guides d'ondes est progressivement coupée. Les deux pièges T1 et T2 se déplacent jusqu'à fusionner en un seul piège se situant au point de départ schématisé à l'instant $t_1$.

Des courants continus sont ainsi appliqués aux deux fils correspondant au point de croisement initial C1, et au cours du temps ces courants sont successivement appliqués aux différents points de croisements Ci situés sur l'axe de symétrie Y, en appliquant simultanément une puissance micro-onde sur les guides d'ondes.

Lors de l'étape C0, les courants continus appliqués aux différents fils WIdi varient continûment (augmentation et diminution) entre 0 et une valeur maximale Idimax (normalisée à 1 sur la figure 7), tandis que le champ magnétique Bc et le courant I restent constants pendant la séquence.

Dans toute les étapes A0, B0 et C0, les deux pièges T1 et T2 restent à l'altitude h.

Les deux pièges T1 et T2 se déplacent dans le sens « d'allumage » des points de croisement : du point de croisement C1 vers le point de croisement Cn.

Le retour s'effectue en inversant les fréquences micro-onde et en allumant les courants continus successivement dans les fils correspondants aux différents points de croisement en les parcourant de Cn vers C1.

Les pièges parcourent ainsi la trajectoire fermée.

Lors d'une étapes D0, les états $|a\rangle$ et $|b\rangle$ sont recombinés en appliquant aux atomes ultrafroids une deuxième impulsion $\pi/2$.

La deuxième impulsion $\pi/2$ transfère la différence de phase sur les populations des deux niveaux atomiques.

Les impulsions $\pi/2$ peuvent être envoyées aux atomes via les guides micro-ondes ou via un émetteur micro-onde séparé.

La séquence allant de la première impulsion $\pi/2$ à la deuxième impulsion $\pi/2$ inclus est la séquence de Ramsey.

Le nombre d'atomes dans un état choisi parmi au moins les états $|a\rangle$ et $|b\rangle$ est ensuite mesurée.

Enfin, lors d'une étape E0, la phase Sagnac des atomes ultrafroids (phase de l'interféromètre) est déterminée et la vitesse de rotation du capteur selon l'axe Z est calculée.

Pour mesurer une vitesse de rotation selon un axe, il convient de générer une trajectoire dans un plan perpendiculaire à cet axe.

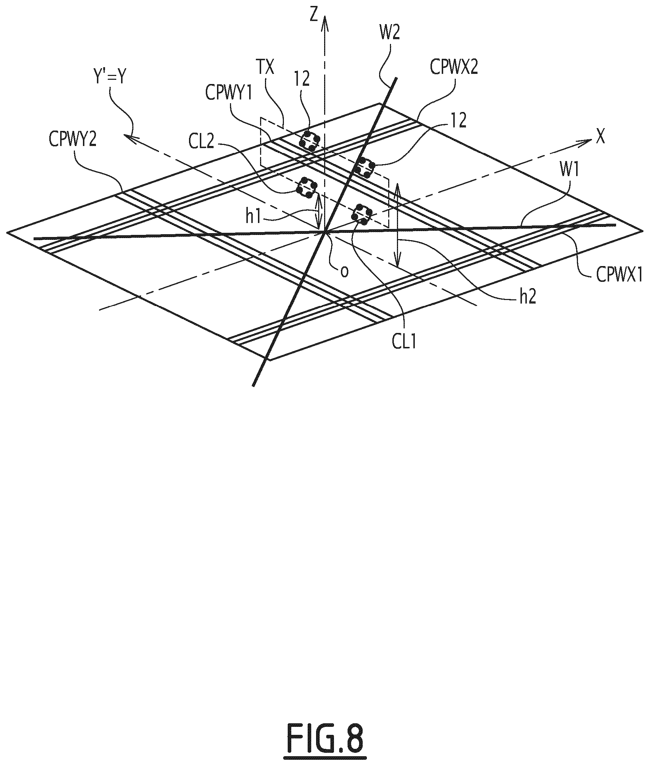

Un deuxième exemple de topologie de puce est illustré sur la figure 8.

La puce atomique comprend une première paire de guides d'ondes CPWX1 et CPWX2 parallèles entre eux et disposés symétriquement par rapport à un axe X et une deuxième paire de guides d'ondes CPWY'1, CPWY'2 parallèles entre eux et disposés symétriquement par rapport à un axe Y'.

Dans cet exemple non limitatif, l'axe Y' est perpendiculaire à X et égal à l'axe Y.

L'axe Y' étant différent de l'axe X, les deux paires de guides sont sécantes et définissent un parallélogramme.

La puce comprend également deux fils conducteurs W1 et W2 qui se croisent en un point O.

Lorsque les deux fils conducteurs W1 et W2 sont traversés par un courant continu, ils génèrent le potentiel Vini qui présente un minimum au point O.

Le nuage CL de départ est ainsi piégé au-dessus du point O.

Pour des questions de symétrie, le point O est préférentiellement confondu avec le centre du parallélogramme.

Dans cet exemple, des trajectoires perpendiculaires à X (trajectoire TX) et Y (trajectoires TY) sont réalisées.

Pour mesurer la vitesse de rotation $\Omega x$ selon l'axe X, la trajectoire TX est générée via les guides d'ondes, les fils conducteurs et le champ Bc.

De même pour mesurer la vitesse de rotation $\Omega y'$ selon l'axe Y', une trajectoire TY' est générée via les guides d'ondes, les fils conducteurs et le champ Bc.

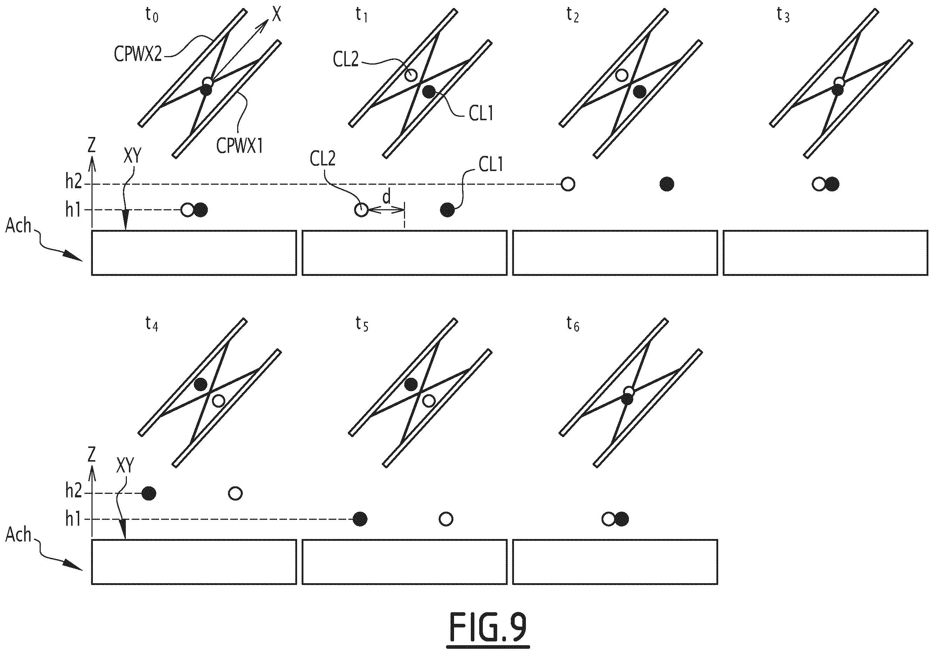

Le trajet des atomes pour la réalisation de la trajectoire TX est illustré figure 9.

La séquence de Ramsey débute à à l'instant $t_0$ (des courants continus sont appliqués aux deux fils conducteurs W1 et W2 pour la génération de Vini).

A l'instant $t_1$, les nuages sont séparés, la séparation des deux nuages s'effectue de manière identique à la technique précédemment décrite (application de signaux micro-ondes aux guides).

A l'instant $t_2$, les nuages CL1 et CL2 sont déplacés d'une hauteur h1 vers une hauteur h2 en modifiant la valeur du courant circulant dans les fils et/ou en modifiant la valeur du champ Bc.

Une portion sensiblement verticale de la trajectoire est alors parcourue, sur une distance w = h2-h1.

Puis, à l'instant $t_3$, les deux nuages sont ramenés sur l'axe X toujours à la hauteur h2 par diminution progressive jusqu'à annulation de la puissance appliquée aux guides d'ondes.

L'autre partie de la deuxième portion de trajectoire à h2 de l'autre côté de l'axe X (instants $t_4$ et $t_5$) est obtenue par inversion des valeurs des fréquences des micro-ondes appliquées au guides CPWX1 et CPWX2.

Puis, une redescente à la hauteur h1 à l'instant $t_5$ est réalisée en revenant aux valeurs initiales des courants circulant dans les fils conducteurs et/ou à la valeur initiale du champ magnétique.

Les deux nuages se rejoignent enfin à l'instant $t_6$ par annulation de la puissance micro-onde appliquée aux guides.

Les géométries des puces des figures 5 et 8 peuvent être combinés en intégrant des fils additionnels définissant des points de croisements à l'intérieur du parallélogramme définit par les guides.

Il est ainsi un capteur inertiel interférométrique permettant la mesure des trois vitesses de rotation $\Omega x$, $\Omega y$ et $\Omega z$.

De retour sur la figure 1, le rôle de chacun des différents éléments du système de mesure 10 va maintenant être décrit.

La puce atomique 12 est une puce sur laquelle est réalisé l'ensemble de capteurs inertiels 14.

Dans l'exemple de la figure 1, l'ensemble des capteurs inertiels 14 est agencé sur la puce 12 selon un agencement matriciel.

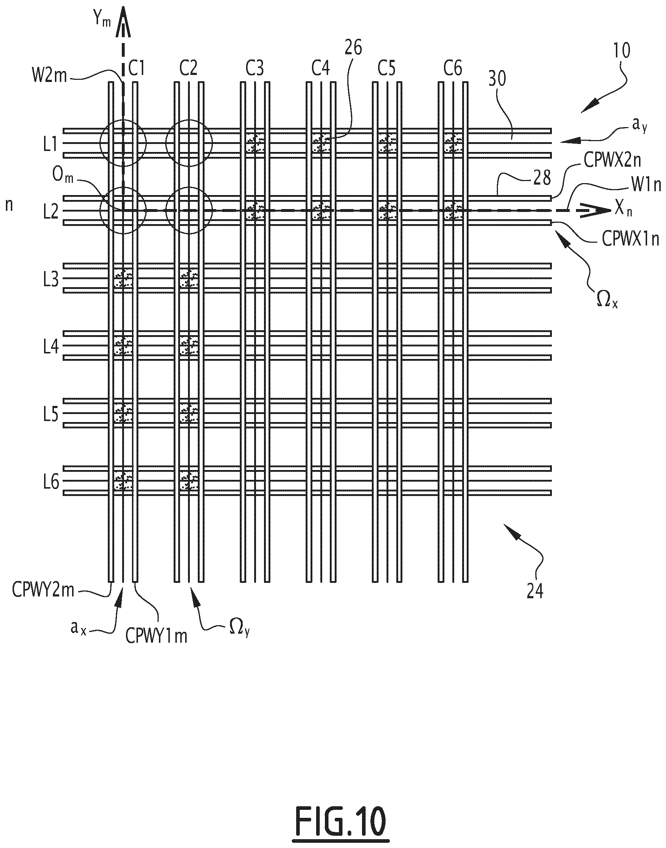

La puce 12 est plus spécifiquement visible sur la figure 10.

Dans cette exemple, la puce 12 est une matrice 24 de puces élémentaires 26. Selon l'exemple, la matrice 24 est une matrice 6x6.

Chaque puce élément 26 est réalisée selon les exemples précédents et comportent à ce titre des guides d'ondes 28 et des fils conducteurs 30.

Les guides d'ondes 28 selon 6 axes Xn et selon 6 axes Ym forment les colonnes et les lignes de la matrice.

Chaque puce élémentaire 26 de la matrice 24 correspond à un capteur inertiel 14 élémentaire potentiel qui peut être configuré en fonction du besoin par une séquence d'interférométrie appropriée et peut être repérée par un doublet (n, m) où n est un entier désignant la ligne à laquelle appartient la puce élémentaire 26 et m est un entier désignant la colonne à laquelle appartient la puce élémentaire 26.

Par exemple, les puces élémentaires 26 de la colonne C1 mesurent l'accélération ax selon X, les puces élémentaires 26 de la colonne C2 mesurent la vitesse de rotation $\Omega y$ autour de l'axe Y, les puces élémentaires 26 de la ligne L1 mesurent l'accélération ay selon Y et les puces élémentaires 26 de la ligne L2 mesurent la vitesse de rotation $\Omega x$ autour de l'axe X.

Comme une mesure implique une séquence particulière pour les guides 28 coplanaires, ceux-ci ne peuvent être partagés pour deux mesures simultanées de deux paramètres inertiels distincts.

Ainsi, les puces élémentaires 26 entourées d'un cercle ne sont pas utilisés.

La puce matricielle 12 est ainsi reconfigurée selon les besoins : le type de mesure souhaité (ax, ay, $\Omega x$, $\Omega y$, t), la précision souhaitée (fonction du nombre de puce réalisant simultanément la mesure) ou autres.

Dans cette configuration, une mesure de $\Omega z$ est également possible avec une séquence particulière d'application de courants continus et/ou du champ magnétique et/ou des champs micro-ondes, avec une topologie de la puce matricielle adaptée le cas échéant.

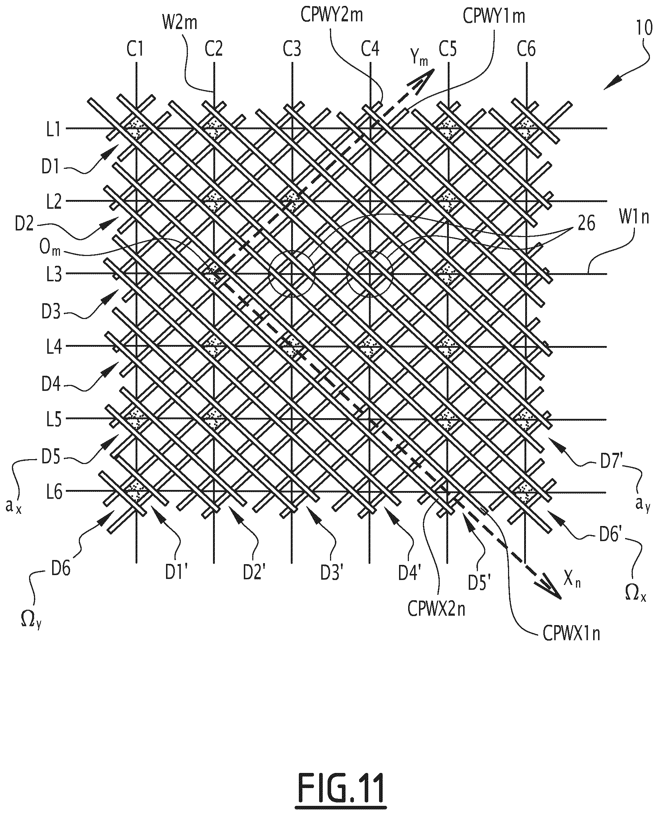

Un autre exemple d'agencement de puce matricielle 12 est décrit en référence à la figure 11.

Cet agencement correspond également à une matrice 6x6 de puces élémentaires 26.

Dans cet agencement, les guides d'ondes 28 forment les diagonales, numérotées D1 à D6, puis D1' à D6'. Les lignes et les colonnes sont formées par les fils 30, notés W1n et W2m.

Des puces élémentaires 26 de la diagonale Sud-Ouest / Nord-Est D5 mesurent l'accélération ax selon X tandis que certaines puces élémentaires 26 de la diagonale D6 mesurent la vitesse de rotation $\Omega y$ autour de l'axe Y.

Des puces élémentaires 26 de la diagonale Sud-Est / Nord-Ouest D6' mesurent la vitesse de rotation $\Omega x$ autour de l'axe X tandis que les puces élémentaires 26 de la diagonale Sud-Est / Nord-Ouest D7' mesurent l'accélération ay selon Y.

Ainsi les puces élémentaires 26 entourées d'un cercle ne sont pas utilisées pour les mêmes raisons que précédemment.

Selon encore une autre géométrie, les trajectoires sont réalisées selon les trois axes à l'aide de paires additionnelles de guides d'ondes et d'un fil conducteur évasé définissant un plan DC. Des séquences particulières de signaux micro-onde sont appliquées aux différentes paires, incluant des signaux à une pulsation $\omega_a$, une pulsation $\omega_b$ et des signaux incluant les deux pulsations, signal noté $\omega_a + \omega_b$ et appelé signal « somme ».

Un effet de l'application d'un signal « somme » (signal issu de la somme d'un signal à la pulsation $\omega_a$ et d'un signal à la pulsation $\omega_b$) est de repousser les deux nuages du côté opposé à celui où se trouve le guide dans lequel circule ce signal, pour la réalisation d'une trajectoire pour la mesure d'une vitesse de rotation selon l'axe Z.

Il est également possible d'utiliser cet agencement pour réaliser un passage d'une hauteur h1 à une hauteur h2 lorsque deux guides disposés de part et d'autres des nuages sont simultanément parcourus par le signal « somme », pour la réalisation de trajectoires pour la mesure d'une vitesse de rotation selon les axes X et Y.

Encore une autre géométrie de puce matricielle 12 peut se baser sur deux rubans conducteurs sécants dont l'intersection est comprise au moins en partie dans le parallélogramme défini par les deux paires de guides d'ondes.

Les trajectoires sont alors réalisées par application d'une séquence spécifique de signaux micro-onde dans les guides, en utilisant également l'effet « repoussoir » de signaux « somme ».

Chacun des agencements matriciels précédents permet de réaliser sur une seule et même puce la fonction horloge, la mesure de l'accélération suivant deux axes orthogonaux et la mesure des vitesses angulaires suivant trois axes orthogonaux deux à deux.

Ces agencements permettent aussi de dupliquer la géométrie élémentaire sur une même puce atomique 12 pour réaliser toutes les mesures précédemment citées en parallèle et implémenter une redondance entre les différentes mesures ou réaliser des mesures complémentaires.

La puce atomique 12 est ainsi un ensemble de guides d'ondes 28 et des éléments conducteurs (ici des fils 30) agencés pour permettre le fonctionnement de capteur inertiel.

La puce atomique 12 est placée dans une enceinte à vide 32.

L'enceinte à vide 32 permet d'entretenir un environnement de vide permettant de limiter les collisions entre atomes froids piégés et l'environnement.

L'enceinte à vide 32 comprend, par exemple, une pompe ionique 34 et un blindage magnétique 36.

Dans la puce atomique 12, le nombre de capteurs inertiels 14 est avantageusement supérieur à 7.

Comme expliqué précédemment, chaque capteur 14 de l'ensemble est un capteur interférométrique configuré pour mesurer une grandeur physique par mise en œuvre d'une séquence d'interférométrie.

La mise en œuvre de la séquence d'interférométrie conduisant le capteur 14 à :

- générer un potentiel initial de piégeage d'un nuage d'atomes ultrafroids,
- séparer spatialement le nuage piégé dans le potentiel initial en un premier nuage d'atomes ultrafroids dans un premier état et un deuxième nuage d'atomes ultrafroids dans un deuxième état par formation respective d'un premier piège à atomes pour le premier nuage et d'un deuxième piège à atomes pour le deuxième nuage, et
- déplacer les pièges formés suivant une trajectoire respective pour le premier nuage et le deuxième nuage.

En référence notamment aux figures 2 et 7, la trajectoire dépend du type de mesure effectuée par le capteur 14.

Le dispositif de génération d'atomes 16 est configuré pour générer le nuage d'atomes ultrafroids.

Le dispositif de génération d'atomes 16 est agencé spatialement pour que le nuage d'atomes ultrafroids soit piégé par le potentiel initial de piégeage.

Pour cela, selon l'exemple de la figure 1, le dispositif de génération d'atomes 16 comprend un émetteur d'atomes 38 et un piège à atomes 40.

L'émetteur d'atomes 38 permet d'émettre des atomes vers la puce 12.

A titre d'illustration, l'émetteur d'atomes 38 est un filament chauffant délivrant une vapeur de rubidium.

Le piège à atomes 40 est un piège permettant de refroidir les atomes émis par l'émetteur d'atomes 38 et ainsi de disposer du nuage d'atomes froids.

Le piège à atomes 40 est, selon les cas, un piège magnétique, un piège optique ou un piège magnéto-optique.

Le générateur de champ magnétique homogène 18 permet d'assurer la présence d'un champ magnétique homogène et stationnaire sur une certaine épaisseur au-dessus du plan de mesure de la puce atomique 12.

Avantageusement, la direction du champ magnétique homogène est parallèle au plan de mesure.

Le générateur de champ magnétique homogène 18 est, par exemple, un ensemble de deux bobines de Helmholtz, le courant circulant dans les bobines étant contrôlé par un générateur de courant.

Le dispositif d'alimentation 20 est configuré pour appliquer des signaux micro-ondes aux guides d'ondes 28 et des courants continus aux éléments conducteurs.

Selon l'exemple décrit, le dispositif d'alimentation 20 comporte un générateur micro-onde 42 et un générateur de courant continu 44.

Ces deux générateurs 42 et 44 sont reliés aux guides d'ondes 28 et aux éléments conducteurs pour pouvoir injecter le signal approprié (signal micro-one ou courant continu).

L'unité de traitement 22 applique une séquence d'interférométrie respective à chaque capteur 14 en commandant le générateur de champ magnétique homogène 18 et le dispositif d'alimentation 20.

L'unité de traitement 22 est typiquement un calculateur.

Dans l'exemple décrit, l'unité de traitement 22 est, en outre, configuré pour appliquer une séquence d'interférométrie respective à chaque capteur d'un sous-ensemble de capteurs 14, le sous-ensemble de capteurs 14 réalisant la même mesure

Ainsi, dans le cas d'un système de mesure 10 qui serait une centrale inertielle, plusieurs sous-ensembles de capteurs 14 sont contrôlés par l'unité de traitement 22 pour réaliser plusieurs mesures.

Pour chaque sous-ensemble, la mise en œuvre des séquences d'interférométrie respective par le sous-ensemble de capteurs 14 conduit les capteurs 14 du sous-ensemble à mesurer la même grandeur physique avec une trajectoire suivie lors du déplacement variant d'un capteur 14 du sous-ensemble à un autre capteur 14 du sous-ensemble par au moins un paramètre relatif à la trajectoire.

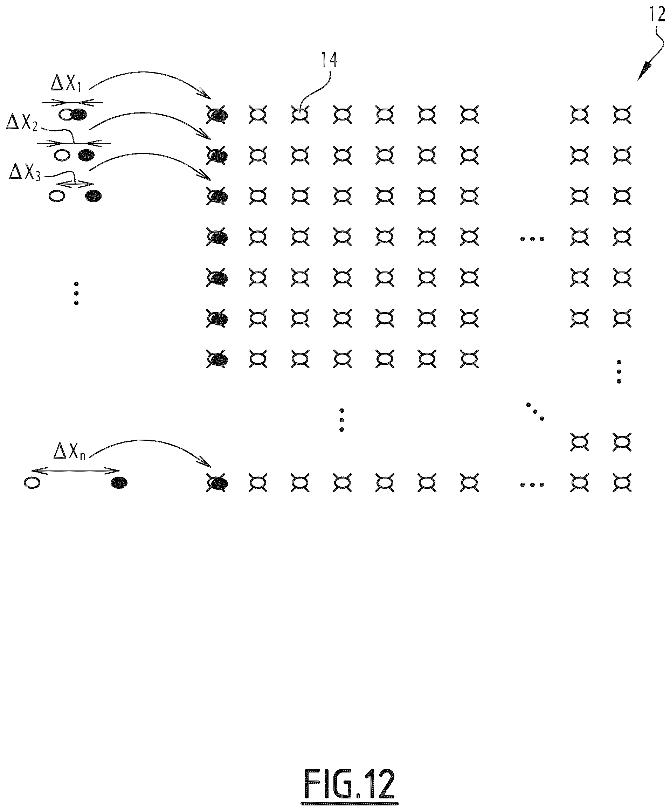

Par exemple, selon l'exemple de la figure 12, les capteurs 14 de la première colonne C1 sont utilisés comme accéléromètres.

Dans ce cas, la distance de séparation des nuages varie d'un capteur 14 de la première colonne C1 à un autre.

D'un point de vue matériel, cela signifie que les puissances injectées dans les guides d'onde varient d'un capteur 14 de la première colonne C1 à un autre.

Selon un autre cas, c'est la durée de la séparation $T_S$ qui varie d'un capteur de la première colonne C1 à un autre.

Cela est obtenu en faisant varier la durée totale de mise en œuvre des étapes C0 et D0.

Comme expliqué précédemment, la différence de position $\Delta x$ et la durée de la séparation $T_S$ permet de faire varier la valeur de la sensibilité *S* d'un accéléromètre. En faisant varier ces paramètres relatifs à la trajectoire de réalisée par les pièges, l'unité de traitement 22 dispose de plusieurs mesures de la même grandeur physique réalisées à des sensibilités différentes.

Des remarques similaires s'appliquent au cas où les capteurs 14 de la première colonne C1 sont utilisés comme gyromètres.

Selon un premier exemple, l'aire de la trajectoire réalisée par les pièges est diminuée.

Plusieurs techniques permettent d'obtenir une diminution de l'aire de la trajectoire.

Par exemple, il est possible de diminuer l'amplitude des courants microondes injectée dans chaque guide d'ondes CPW1 et CPW2. Cela a pour effet de diminuer la distance de séparation, et donc l'aire de la trajectoire.

Il est aussi possible de diminuer l'altitude h2 des nuages en réduisant l'amplitude du champ magnétique de biais Bc appliqué après la séparation des nuages pour obtenir le même effet.

Selon un autre exemple, le nombre de tours (nombre de trajectoires parcourues par les pièges) est diminué en ne mettant en œuvre la séquence de la figure 7 qu'un nombre réduit de fois.

Comme expliqué précédemment, l'aire $\|A\|$ de l'espace délimité par les trajectoires et le nombre de tours N permettent de faire varier la valeur de la sensibilité *S* d'un gyromètre, de sorte qu'en faisant varier un paramètre de la trajectoire réalisée par les pièges, l'unité de traitement 22 dispose de plusieurs mesures réalisées à des sensibilités différentes.

Ce qui vient d'être décrit se transpose aisément pour réaliser des horloges avec une résolution variable. Dans ce cas, la séquence d'interférométrie consiste à appliquer deux impulsions $\Pi/2$ identiques, mais séparées dans le temps de $T_R$. La sensibilité peut donc être modifiée en faisant varier $T_R$ d'un capteur à un autre.

L'application de séquences de même type différant par au moins un paramètre de la trajectoire réalisée par les pièges permet d'obtenir plusieurs mesures de la même grandeur à des sensibilités différentes.

Pour détecter les phases résultant de la mise en œuvre des séquences d'interférométrie, le système de mesure 10 comporte un dispositif de détection typiquement d'une intensité optique, adapté à mesurer au moins une population d'atomes ultrafroids dans un état interne, cette mesure permettant la détermination de la différence de phase entre les deux états $|a\rangle$ et $|b\rangle$ et donc de déterminer la grandeur physique à mesurer.

En fonctionnement, le système de mesure 10 met, par exemple, en œuvre un procédé de mesure.

Le procédé de mesure comporte l'application par l'unité de traitement 22 d'une séquence d'interférométrie à plusieurs sous-ensembles de capteurs 14.

Plus précisément, pour chaque grandeur physique à mesurer, l'unité de traitement 22 sélectionne un sous-ensemble de capteurs 14 pour effectuer la mesure et envoie une séquence d'interférométrie pour que chaque capteur 14 mesure la grandeur physique à une sensibilité respective.

Les résolutions des capteurs sont choisies pour que les étendues de mesure ne se superposent pas tout en se complétant.

Pour illustrer cela, il est maintenant décrit un exemple pour un accéléromètre avec 3 capteurs (capteur 0, capteur 1 et capteur 2), la transposition aux autres cas étant directe.

Pour choisir la résolution du capteur 0, il est supposé qu'on connaît la valeur maximum des accélérations qu'on veut mesurer, on la note $a_{max}$. On note aussi : $\beta_0 = m\Delta z_0 T_{R_0}/\hbar$, $\beta_0$ (et donc le couple $\Delta z_0$ et $T_{R_0}$) est choisi tel que :

$$\beta_0 a_{max} < \alpha\pi$$

Avec $\alpha$ un coefficient compris entre 0 et 1, qui est choisi en fonction des bruits de mesure. La phase totale du capteur 0 est alors :

$$\varphi_{tot}^0 = \beta_0 a_0$$

$\varphi_{tot}^0$ se décompose en deux parties :

$$\varphi_{tot}^0 = \varphi_{mes}^0 + k_0 \times \pi = \beta_0 a_0$$

Où:

- $k_0$ est par définition égale à 0.

- $\varphi_{tot}^0$ est la phase totale accumulé par le capteur et

- $\varphi_{mes}^{0}$ est la partie accessible lors de la mesure des populations et qui est comprise entre 0 et $\pi$ à cause de l'inversion du cosinus.

Lors de la mesure de $\varphi_{mes}^{0}$ on fait une erreur $\delta\varphi_{mes}^{0}$ qui correspond à l'erreur $\delta a_0$ sur l'accélération :

$$\delta\varphi_{mes}^{0} = \beta_0 \delta a_0$$

Pour le cas du capteur 1, la phase totale est :

$$\varphi_{tot}^{1} = \varphi_{mes}^{1} + k_1 \pi = \beta_1 a_1$$

Où :

- $a_1$ est $a_0$ mais avec une meilleur résolution.
- $k_1$ est estimé par la mesure du capteur précédent :

$$k_1 = E\left[\frac{\beta_1 a_0}{\pi}\right]$$

Où $E[X]$ est la partie entière de $X$.

- $\beta_1$ est choisi en fonction de $\delta\varphi_{mes}^{0}$ et $\beta_0$.

Il peut alors être montré qu'il convient de respecter la condition suivante :

$$\frac{\pi}{\beta_1} > \delta a_0 = \frac{\delta\varphi_{mes}^{0}}{\beta_0}$$

On prendra donc :

$$\frac{\pi}{\beta_1} = \frac{1}{\alpha}\frac{\delta\varphi_{mes}^{0}}{\beta_0}$$

Soit :

$$\beta_1 = \frac{\alpha\pi}{\delta\varphi_{mes}^{0}}\beta_0$$

Lors de la mesure de $\varphi_{mes}^{1}$ on fait une erreur $\delta\varphi_{mes}^{1}$ qui correspond à une erreur $\delta a_1$ sur l'accélération :

$$\delta\varphi_{mes}^{1} = \beta_1 \delta a_1$$

Similairement pour le capteur 2, la phase totale est :

$$\varphi_{tot}^{2} = \varphi_{mes}^{2} + k_2 \pi = \beta_2 a_2$$

Où :

- $a_2$ est $a_1$ mais avec une meilleur résolution.
- $k_2$ est estimé par la mesure du capteur précédent :

$$k_2 = E\left[\frac{\beta_2 a_0}{\pi}\right]$$

- $\beta_2$ est choisi en fonction de $\delta\varphi_{mes}^1$ et $\beta_1$.

Il peut alors être montré qu'il convient de respecter la condition suivante :

$$\frac{\pi}{\beta_2} > \delta a_1 = \frac{\delta\varphi_{mes}^1}{\beta_1}$$

On prendra donc :

$$\frac{\pi}{\beta_2} = \frac{1}{\alpha}\frac{\delta\varphi_{mes}^1}{\beta_1}$$

Soit :

$$\beta_1 = \frac{\alpha\pi}{\delta\varphi_{mes}^1}\beta_1 = \frac{(\alpha\pi)^2}{\delta\varphi_{mes}^1\delta\varphi_{mes}^0}\beta_0$$

Lors de la mesure de $\varphi_{mes}^2$ on fait une erreur $\delta\varphi_{mes}^2$ qui correspond à une erreur $\delta a_2$ sur l'accélération :

$$\delta\varphi_{mes}^2 = \beta_2\delta a_2$$

Ainsi, en généralisant ce raisonnement pour un capteur n, la sensibilité sera obtenue grâce à la formule suivante :

$$\beta_{n+1} = \frac{(\alpha\pi)^n}{\prod_{i=0}^{n}\delta\varphi_{mes}^i}\beta_0$$

Le nombre de capteurs 14 d'un sous-ensemble est choisi comme compris entre 2 et 30.

Le procédé comporte alors la mise en œuvre de la séquence d'interférométrie par chacun des capteurs 14 du sous-ensemble considéré.

De préférence, les séquences d'interférométrie sont mises en œuvre de manière simultanée (les instants de départ sont identiques).

L'unité de traitement 22 vient ensuite récupérer l'ensemble des mesures et vient les traiter pour obtenir une mesure de la grandeur physique considérée.

Le procédé proposé permet ainsi d'agrandir l'étendue de mesure de chaque grandeur physique inertielle mesurée.

Cela permet également de bénéficier d'une redondance de mesure d'un même paramètre par plusieurs capteurs, mais dont certains fonctionnent avec une sensibilité volontairement dégradée.

Le procédé présenté ici offre la possibilité d'augmenter l'étendue de mesure sans rogner sur la sensibilité.

Ceci permet de réduire les erreurs sur la détermination de la mesure.

Le procédé est de mise en œuvre aisée dans la mesure où il ne dépend pas de l'architecture spécifique du système de mesure 10.

Cela rend possible son emploi dans le cadre embarqué.

De plus, la géométrie du sous-ensemble n'est pas limitative, la disposition selon une colonne selon la figure 12 n'étant pas obligatoire.

Il peut être envisagé toute combinaison de modifications de paramètres de la trajectoire réalisée par les pièges.

Par exemple, dans le cas d'un accéléromètre, si cela est pertinent, il peut être varié à la fois la distance de séparation $\Delta x$ et la durée de la séparation $T_S$ pour obtenir une plus grande variété de valeurs de sensibilité.

# EP 4 657 020 A1

**Revendications**

1. Système de mesure (10) à atomes ultrafroids, le système de mesure (20) comprenant :

- un ensemble de capteurs (14) inertiels à atomes ultrafroids, chaque capteur (14) de l'ensemble étant un capteur interférométrique configuré pour mesurer une grandeur physique par mise en œuvre d'une séquence d'interférométrie,
la mise en œuvre de la séquence d'interférométrie conduisant le capteur (14) à :

- générer un potentiel initial de piégeage d'un nuage d'atomes ultrafroids,
- séparer spatialement le nuage piégé dans le potentiel initial en un premier nuage d'atomes ultrafroids dans un premier état et un deuxième nuage d'atomes ultrafroids dans un deuxième état par formation respective d'un premier piège à atomes pour le premier nuage et d'un deuxième piège à atomes pour le deuxième nuage, et
- déplacer les pièges formés suivant une trajectoire respective pour le premier nuage et le deuxième nuage,

- une unité de traitement (22) configurée pour appliquer, pour au moins un sous-ensemble de capteurs, une séquence d'interférométrie respective à chaque capteur (14) d'un sous-ensemble de capteurs, la mise en œuvre des séquences d'interférométrie respective par ledit au moins un sous-ensemble de capteurs (14) conduisant les capteurs (14) du sous-ensemble à mesurer la même grandeur physique avec une trajectoire suivie lors du déplacement des pièges variant d'un capteur (14) du sous-ensemble à un autre capteur (14) du sous-ensemble par au moins un paramètre relatif à la trajectoire.

2. Système de mesure selon la revendication 1, dans lequel au moins un sous-ensemble de capteurs (14) est propre à mesurer une accélération, au moins un paramètre relatif à la trajectoire étant une distance de séparation entre les deux pièges.

3. Système de mesure selon la revendication 1 ou 2, dans lequel au moins un sous-ensemble de capteurs (14) est propre à mesurer une accélération, au moins un paramètre relatif à la trajectoire étant le temps de parcours de la trajectoire.

4. Système de mesure selon l'une quelconque des revendications 1 à 3, dans lequel au moins un sous-ensemble de capteurs (14) est propre à mesurer une vitesse angulaire, au moins un paramètre relatif à la trajectoire étant la surface de l'aire délimitée par la trajectoire.

5. Système de mesure selon l'une quelconque des revendications 1 à 4, dans lequel au moins un sous-ensemble de capteurs (14) est propre à mesurer une vitesse angulaire, au moins un paramètre relatif à la trajectoire étant le nombre de fois que la trajectoire est parcourue.

6. Système de mesure selon l'une quelconque des revendications 1 à 5, dans lequel l'ensemble de capteurs (14) est réalisé sur une même puce atomique (12) placée dans une enceinte à vide (32) et comportant des guides d'ondes (28) et des éléments conducteurs (30).

7. Système de mesure selon la revendication 6, dans lequel le système de mesure (20) comporte, en outre :

- un dispositif de génération d'atomes (16) configuré pour générer un nuage initial d'atomes ultrafroids,
- un générateur de champ magnétique homogène (18),
- un dispositif d'alimentation (20) comprenant au moins un générateur micro-onde (42) et au moins un générateur de courant continu (44), le dispositif d'alimentation (20) étant configuré pour appliquer des signaux micro-ondes aux guides d'ondes (28) et des courants continus aux éléments conducteurs (30),

l'unité de traitement (22) appliquant une séquence d'interférométrie respective à chaque capteur (14) de l'au moins un sous-ensemble de capteurs (14) en commandant le générateur de champ magnétique homogène (18) et le dispositif d'alimentation (20).

8. Système de mesure selon l'une quelconque des revendications 1 à 7, dans lequel l'unité de traitement (22) est propre à appliquer une séquence d'interférométrie respective à chaque capteur (14) de plusieurs sous-ensemble de capteurs (14), la mise en œuvre des séquences d'interférométrie respective par chaque sous-ensemble de capteurs (14) conduisant les capteurs (14) dudit sous-ensemble à mesurer la même grandeur physique avec une trajectoire

**18**

suivie lors du déplacement variant d'un capteur (14) du sous-ensemble à un autre capteur (14) du sous-ensemble par au moins un paramètre relatif à la trajectoire, la grandeur physique mesurée étant distincte d'un sous-ensemble à l'autre.

**9.** Système de mesure selon l'une quelconque des revendications 1 à 8, dans lequel le nombre de capteurs (14) d'un sous-ensemble est compris entre 2 et 30.

**10.** Procédé de mesure d'une grandeur physique par un système de mesure (10) à atomes ultrafroids, le système de mesure (20) comprenant :

- un ensemble de capteurs (14) inertiels à atomes ultrafroids, chaque capteur (14) de l'ensemble étant un capteur interférométrique configuré pour mesurer une grandeur physique par mise en œuvre d'une séquence d'interférométrie,
- une unité de traitement (22),

le procédé de mesure comprenant :

- une étape d'application par l'unité de traitement (22), pour au moins un sous-ensemble de capteurs, d'une séquence d'interférométrie respective à chaque capteur (14) d'un sous-ensemble de capteurs (14),

la mise en œuvre de la séquence d'interférométrie respective par ledit au moins un sous-ensemble de capteurs (14) conduisant les capteurs (14) du sous-ensemble à :

- générer un potentiel initial de piégeage d'un nuage d'atomes ultrafroids,
- séparer spatialement le nuage piégé dans le potentiel initial en un premier nuage d'atomes ultrafroids dans un premier état et un deuxième nuage d'atomes ultrafroids dans un deuxième état par formation respective d'un premier piège à atomes pour le premier nuage et d'un deuxième piège à atomes pour le deuxième nuage,
- déplacer les pièges formés suivant une trajectoire respective pour le premier nuage et le deuxième nuage, et
- mesurer la même grandeur physique avec une trajectoire suivie lors du déplacement variant d'un capteur (14) du sous-ensemble à un autre capteur (14) du sous-ensemble par au moins un paramètre relatif à la trajectoire.

FIG.1

## FIG.2

## FIG.3

FIG.4

**FIG.5**

FIG.6

**FIG.7**

**FIG.8**

FIG.9

EP 4 657 020 A1

FIG.10

## FIG.11

FIG.12

| | Europäisches Patentamt<br>European Patent Office<br>Office européen des brevets | **RAPPORT DE RECHERCHE EUROPEENNE** | **Numéro de la demande**<br>EP 25 17 9509 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br><br>Y | EP 4 102 182 A1 (THALES SA [FR])<br>14 décembre 2022 (2022-12-14)<br>* figures 1-3,5,9,10,15,30 *<br>* alinéas [0001] - [0003], [0120] -<br>[0126], [0137] - [0138], [0151], [0154]<br>- [0156], [0162] - [0163] * | 1-4,6-10<br><br>5 | INV.<br>G01C19/58<br>G01P15/00 |
| | ----- | | |
| Y | EP 3 380 808 B1 (THALES SA [FR])<br>5 mai 2021 (2021-05-05)<br>* figures 2,3,5-6,8 *<br>* alinéas [0001] - [0002], [0037] -<br>[0038], [0073] - [0075], [0081], [0082]<br>* | 5 | |
| | ----- | | |

**DOMAINES TECHNIQUES RECHERCHES (IPC)**

G01C
G01P

Le présent rapport a été établi pour toutes les revendications

| Lieu de la recherche | Date d'achèvement de la recherche | Examinateur |
|---|---|---|
| La Haye | 22 septembre 2025 | Faivre, Olivier |

**EP 4 657 020 A1**

## ANNEXE AU RAPPORT DE RECHERCHE EUROPEENNE
## RELATIF A LA DEMANDE DE BREVET EUROPEEN NO.

EP 25 17 9509

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-09-2025

| Document brevet cité au rapport de recherche | | Date de publication | Membre(s) de la famille de brevet(s) | | Date de publication |
|---|---|---|---|---|---|
| EP 4102182 | A1 | 14-12-2022 | CN | 115468550 A | 13-12-2022 |
| | | | EP | 4102182 A1 | 14-12-2022 |
| | | | FR | 3123980 A1 | 16-12-2022 |
| | | | US | 2022397397 A1 | 15-12-2022 |
| EP 3380808 | B1 | 05-05-2021 | CN | 108474660 A | 31-08-2018 |
| | | | EP | 3380808 A1 | 03-10-2018 |
| | | | US | 2018352642 A1 | 06-12-2018 |
| | | | WO | 2017089489 A1 | 01-06-2017 |

EPO FORM P0460

Pour tout renseignement concernant cette annexe : voir Journal Officiel de l'Office européen des brevets, No.12/82